# EUROPÄISCHE PATENTSCHRIFT

(11) **EP 2 617 277 B1**
(45) Veröffentlichungstag und Bekanntmachung des Hinweises auf die Patenterteilung: **09.09.2015**
(21) Anmeldenummer: 13401005.7
(22) Anmeldetag: 17.01.2013
(51) Int. Cl.: A01B 3/46

(54) **Drehpflug**
Alternating plough
Charrue rotative

(30) Priorität: 20.01.2012 DE 102012100452
(43) Veröffentlichungstag der Anmeldung: 24.07.2013
(73) Patentinhaber: Amazonen-Werke H. Dreyer GmbH & Co. KG, 49205 Hasbergen (DE)
(72) Erfinder: Ahring, Sören, 49214 Bad Rothenfelde (DE); Laumann, Bernhard, 48477 Hörstel - Riesenbeck (DE); Resch, Rainer, 49170 Hagen a TW (DE); Warnecke, Christoph, 49152 bad Essen (DE)

(56) Entgegenhaltungen:
- WO-A1-2010/108468
- FR-A1- 2 079 162
- FR-A1- 2 598 056
- GB-A- 1 026 526

## Beschreibung

Die Erfindung bezieht sich auf einen Drehpflug mit einem an einem Anbaubock zur Verbindung des Drehpfluges mit einem landwirtschaftlichen Schlepper verschwenkbar befestigbaren, über ein Stützrad auf dem Erdboden abstützbaren Pflugrahmen und mit auf gegenüberliegenden Seiten des Pflugrahmens angeordneten Pflugscharen, so dass durch eine über einen Drehzylinder eingeleitete Drehbewegung des Pflugrahmens wahlweise die eine oder die andere Pflugscharreihe in ihre Betriebsstellung oder ihre Außerbetriebsstellung überführbar ist, wobei das Stützrad zur Arbeitstiefenführung des Drehpfluges über ein vorzugsweise als Radzylinder ausgebildetes Verstellelement in seiner Arbeitstiefenführung einstellbar ist und bei einer Drehung des Pflugrahmens das Stützrad mitsamt dem vorzugsweise als Radzylinder ausgebildeten Verstellelement in seine gegenüberliegend ausgerichtete Stützbetriebsstellung verschwenkt.

Drehpflüge, vielfach auch als Wendepflüge bezeichnet, mit auf gegenüberliegenden Seiten eines Pflugrahmens angeordneten Pflugscharreihen haben jeweils Pflugscharreihen, die auf der einen Seite rechtswendende Pflugkörper und auf der anderen Seite linkswendende Pflugkörper aufweisen, die jeweils wechselseitig bei einer Hinfahrt und bei einer Rückfahrt zum Einsatz kommen. Der Pflugrahmen ist über ein Stützrad auf dem Erdboden abzustützen, über das eine Tiefeneinstellung des Pfluges erfolgen kann. Dies kann über mechanische Spindeln, aber auch über Hydraulikzylinder erfolgen, um je nach den Pfluganforderungen die optimale Arbeitstiefeneinstellung bzw. -führung sicherstellen zu können.

Durch die FR 20 79 162 A1 ist ein weiterer Drehpflug gemäß des Oberbegriffes des Anspruches 1 bekannt. Dieser Drehpflug weist ein Stützrad auf, das die Arbeitstiefenführung des Pfluges übernimmt. Beim Drehen des Pfluges schwenkt das Stützrad in die entgegengesetzte Richtung. Dies ist möglich, weil der mechanische Riegel aufgrund der Schwerkraft verschwenkt und das Stellorgan freigibt. Nach dem Drehen des Pfluges verriegelt das Stellorgan auf mechanische Weise das Stellorgan, so dass das Stützrad wieder seine definierte Position zur Tiefenführung des Pfluges einnimmt.

Aus der DE 10 2006 039 513 ist ein Drehpflug der eingangs genannten Art bekannt, bei dem ein Drehzylinder, ein Schwenkzylinder zur Breitenverstellung des Pflugrahmens sowie ein Radzylinder zur Arbeitstiefeneinstellung des Stützrades vorgesehen sind, die über eine hydraulische Folgesteuerung derart miteinander gekoppelt sind, dass bei Einleitung eines Drehvorganges zunächst ein Schaltventil des Schwenkzylinders zur Breitenverstellung des Pflugrahmens derart betätigt wird, dass ein Einschwenken des Pflugrahmens in einer ersten Phase erfolgt. Der Radzylinder des Stützrades wird betätigt, um das Stützrad in eine angehobene mittlere Position zu überführen, wonach der Pflugrahmen um 180° verschwenkt wird und dann ein Ausschwenken des Pflugrahmens und ein Überführen des Stützrades in die Stützstellung über den Radzylinder erfolgen kann.

Nachteilig hierbei ist, dass über den Radzylinder die Optimale Arbeitstiefenführung wieder über eine separate Steuerung einzunehmen, ist, was einen nicht unerheblichen baulichen Aufwand erfordert, um nach einer Hinfahrt während der Rückfahrt gleiche Arbeitsergebnisse zu erzielten.

Aus der WO2010/108468 A1 ist ein dort als Drehpflug bezeichneter Drehpflug mit einem Stützrad bekannt, bei dem die Arbeitstiefenführung über einen Hydraulikzylinder eingestellt werden kann. Das Stützrad schwenkt während des Drehvorganges in die jeweils gegenüberliegende Arbeitsstellung um, wobei ein autarkes Hydrauliksystem mit einer vorgegebenen Ölmenge, einer Ventileinheit und einem Druckspeicher vorgesehen ist. Das Stützrad ist in die gegenüberliegende Arbeitsstellung umzuschwenken und kann nach dem Umschwenkvorgang seine vorgegebene Arbeitstiefeneinstellung erreichen. Dies geschieht auf hydraulischem Wege über einen Ölaustausch zwischen den Druckräumen des Hydraulikzylinders und dem Druckspeicher, was ebenfalls einen erhöhten Bauaufwand verursacht und einen Druckspeicher voraussetzt. Während des rauen Alltagsbetriebes eines Drehpfluges sind derartige Hydraulikzylinder und Druckspeicher einem erhöhten Verschleiß ausgesetzt.

Es ist Aufgabe der vorliegenden Erfindung, einen Drehpflug der eingangs genannten Art derart weiterzubilden, dass mit einem verminderten Bauaufwand ein Drehvorgang bei einem Drehpflug durchzuführen ist und gleichwohl das Stützrad nach einem Drehvorgang in einer voreingestellten Stützbetriebsstellung für eine nachfolgende Pflugarbeit zur Verfügung steht.

Zur Lösung dieser Aufgabe zeichnet sich der Drehpflug der eingangs genannten Art aus den Merkmalen des kennzeichnenden Teils des Anspruchs 1.

Damit ist ein Drehpflug zur Verfügung gestellt, bei dem das Stellelement des Stützrades in einer Pflugbetriebs- und damit Pflugarbeitsstellung einer Pflugscharreihe an einem Stellorgan in seiner eingestellten Arbeitstiefenführung mechanisch abgestützt ist. Dieses führt vor allem bei Drehpflügen mit als hydraulischen Radzylindern ausgebildeten Verstellelementen zu einer großen Vereinfachung. Soll ein Drehvorgang des Pflugrahmens eingeleitet werden, kann das Stellorgan aus dieser das Widerlager darbietenden Betriebsstellung freigegeben werden, wonach der hydraulische Radzylinder in seiner Stellung verbleibt und damit auch das Stützrad in seiner eingestellten Arbeitstiefenführungsstellung. Das Stellorgan gibt einen Raum frei, in dem während der durch die Drehung hervorgerufenen Verschwenkung des Pflugrahmens und damit während der durch die Drehung hervorgerufenen Verschwenkung der beiden Pflugscharreihen das Stützrad pendeln kann. Ab einer Drehbewegung von 90° wird das Stützrad bzw. das damit verbundene Stützradpendel so auf das freigegebene Stellorgan wirken, dass es das Stellorgan unter weiterer Verschwenkung wegschieben kann bis in seine Stellung, in der es frei durchpendelt und in die gegenüberliegende Betriebsstellung bewegt ist. Danach kann das Stellorgan durch eine mechanische Beaufschlagung, aber auch beispielsweise durch Freigabe eines hydraulischen Mediums wieder in seine Endstellung bewegt werden, in der es das Widerlager für den Radzylinder darbietet.

Wesentlicher Vorteil dieses so gebildeten Stellorgans ist, dass dieses immer nur zwischen zwei Endpositionen, nämlich der Freigabeendposition und der Widerlagerendposition zu bewegen ist, wobei der hydraulische Radzylinder in seiner einmal eingestellten Stellung verbleiben kann. Gleichwohl kann der Radzylinder unterschiedliche Arbeitstiefenführungen über eine entsprechende hydraulische Einstellung realisieren, jedoch muss diese Einstellung nach einem Drehvorgang nicht wieder erneut durchgeführt werden.

Das Stellorgan kann als Spindel oder auch sonstiges mechanisches Bauteil ausgebildet sein, das über einen Antrieb in die entsprechenden Endpositionen zu bringen ist. Bevorzugt ist jedoch, dieses Stellorgan als Hydraulikzylinder auszubilden und auch in eine Folgesteuerung eines Drehzylinders zu 180°-Drehung des Pflugrahmens und die eines Schwenkzylinders zur Breitenverstellung des Pflugrahmens einzubeziehen. Ist das Stellorgan als Stellzylinder ausgebildet, kann beispielsweise auch noch durch das Vorsehen von Blenden in dem Hydraulikkreislauf der Rücklauf eines Hydraulikmediums vom Stellzylinder beeinflusst werden, also wie leicht oder wie schwer sich eine Kolbenstange eines Stellzylinders durch den zu verschwenkenden Radzylinder wegbewegen lässt, wobei sich die Blende beispielsweise auch mit einem einstellbaren Blendenquerschnitt ausführen lässt. Ebenfalls kann vorgesehen sein, dass die jeweilige Endstellung des Stellorgans, in der es das Widerlager für das Verstellelement oder den Radzylinder des Stützrades darbietet, einstellbar ausgebildet ist, so dass z.B. für eine Hinfahrt eine andere das Widerlager darbietende Stellbetriebsstellung einnehmbar ist als beispielsweise bei einer Rückfahrt, um auf die ggf. vorherrschenden unterschiedlichen Verhältnisse bei einem links wendenden Pflugkörper und einem rechts wendenden Pflugkörper Einfluss nehmen zu können. Ein besonderer Vorteil der erfindungsgemäßen Lösung ist, dass die Tiefeneinstellung für das Stützrad und die Freigabe für die Schwenkbewegung des Stützrades bei Drehung des Pflugrahmens getrennten Bauteilen zugeordnet sind.

Bevorzugtermaßen ist ein Folgesteuerventil zwischen dem Stellzylinder und dem Drehzylinder vorgesehen, wobei über das Folgesteuerventil entsprechende Leitungen zur Freigabe des Stellzylinders eine Kolbenseite des Stellzylinders freigegeben wird, so dass das Druckmedium von dieser Kolbenseite abfließen kann, so dass die Kolbenstange des Stellzylinders frei bewegbar ist und den Radzylinder nicht mehr blockiert. Bei einer Drehbewegung des Pflugrahmens nach Passieren einer 90°-Drehstellung kann das Stützrad mitsamt dem Radzylinder die Kolbenstange des Stellzylinders in einem Maße wegbewegen, wie es für den Schwenkweg bzw. Pendelweg bei Überführung in die gegenüberliegende Stützbetriebsstellung erforderlich ist. Dieser Vorgang kann dadurch unterstützt werden, dass beispielsweise die der freigegebenen Kolbenseite der gegenüberliegenden Kolbenseite des Stellzylinders mit einem Druckmedium beaufschlagt wird, sei es über einen Druckspeicher oder über eine Druckleitung, die an die Druckleitung eines anderen Zylinders angeschlossen ist. An das Folgesteuerventil kann auch der Rahmeneinschwenkzylinder zum Ein- und Ausschwenken des Pflugrahmens zwecks Pflugbreitenverstellung angeschlossen sein, und zwar in dem Sinne, dass bei Einleiten einer 180°-Drehbewegung nicht nur der Stellzylinder freigegeben, sondern zunächst auch der Pflugrahmen eingeschwenkt wird, wobei über die entsprechenden Leitungen und Schaltventile, die auch Rückschlagventile umfassen können, der Vorgang zeitlich gestaffelt durchgeführt werden kann.

Weitere vorteilhafte Ausgestaltungen ergeben sich aus weiteren Unteransprüchen, der nachfolgenden Beschreibung und der Zeichnung. In der Zeichnung zeigen:
- Fig. 1: eine Draufsicht auf ein Ausführungsbeispiel eines Drehpfluges nach der Erfindung;
- Fig. 2: eine Seitenansicht des Ausführungsbeispiels nach Fig. 1;
- Fig. 3: vergrößert einen Teilbereich eines Pflugrahmens mit Stützrad und einem Pflugkörper einer Pflugscharreihe;
- Fig. 4: ausschnittsweise einen Teilbereich des Pflugrahmens mit Darstellung des Radzylinders und des Stellzylinders im Bereich eines Stützradpendels (ohne Stützrad);

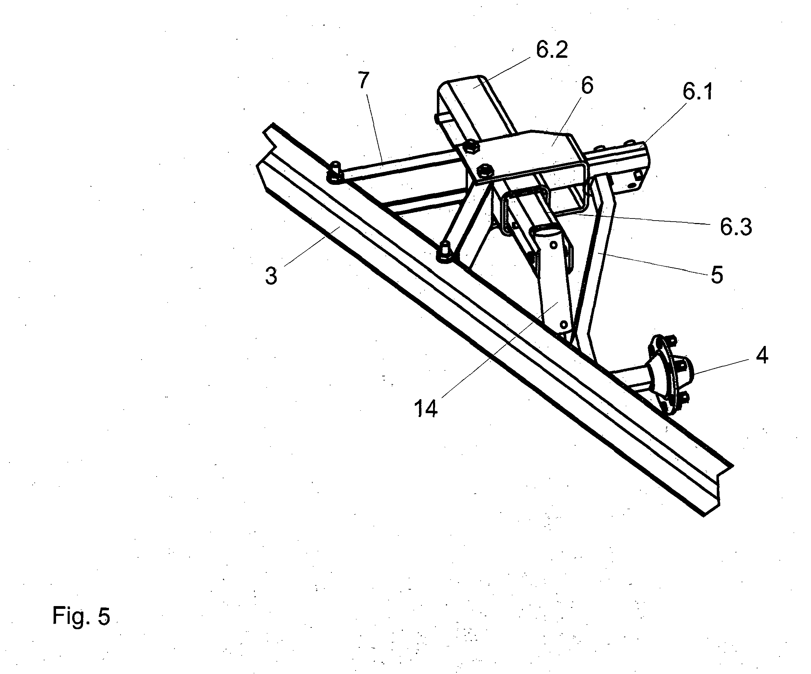

- Fig. 5: eine weitere perspektivische Darstellung (ausschnittsweise) auf das Ausführungsbeispiel nach Fig. 4 aus einem anderen Winkel;
- Fig. 6: einen Schaltplan eines Ausführungsbeispiels eines Hydrauliksystems;
- Fig. 7: eine alternative Gestaltung eines Schaltplans eines Hydrauliksystems;
- Fig. 8: eine weitere Ausführungsvariante eines Schaltplans für ein Hydrauliksystem, und
- Fig. 9: eine weitere Ausführungsvariante eines Schaltplans eines Hydrauliksystems.

In der Zeichnung sind gleichwirkende Bauteile mit übereinstimmenden Bezugsziffern versehen.

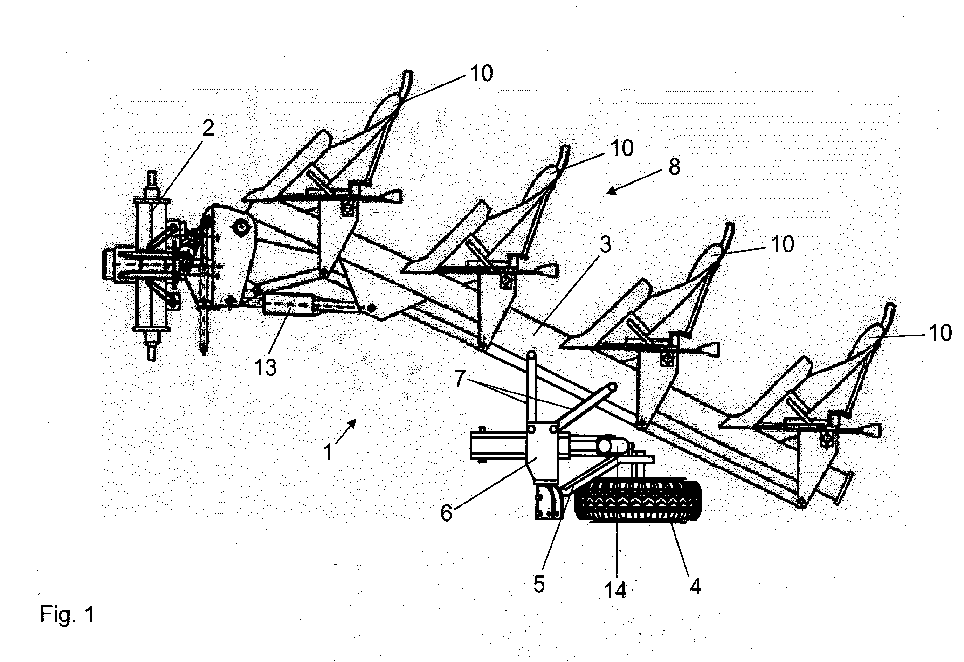

In Fig. 1 ist ein Ausführungsbeispiel eines allgemein mit 1 bezifferten Drehpfluges gezeigt, der über einen Anbaubock 2 an einen im Einzelnen nicht näher gezeigten landwirtschaftlichen Schlepper anhängbar ist und der einen Pflugrahmen 3 aufweist, der über ein Stützrad 4 auf dem Erdboden abzustützen ist. Dieses Stützrad 4 ist über ein Radpendel 5 an einem Pflugrahmenteil 6 verschwenkbar abgestützt, das über Streben 7 mit dem Pflugrahmen 3 verbunden ist. Der Pflugrahmen 3 trägt allgemein mit 8 und 9 bezifferte Pflugscharreihen mit Pflugkörpern 10, die gegenüberliegend an dem Pflugrahmen 3 angeordnet sind. Das Stützrad 4 kann bei entsprechender Ansteuerung und Einstellung auch für den Transport des Pfluges dienen.

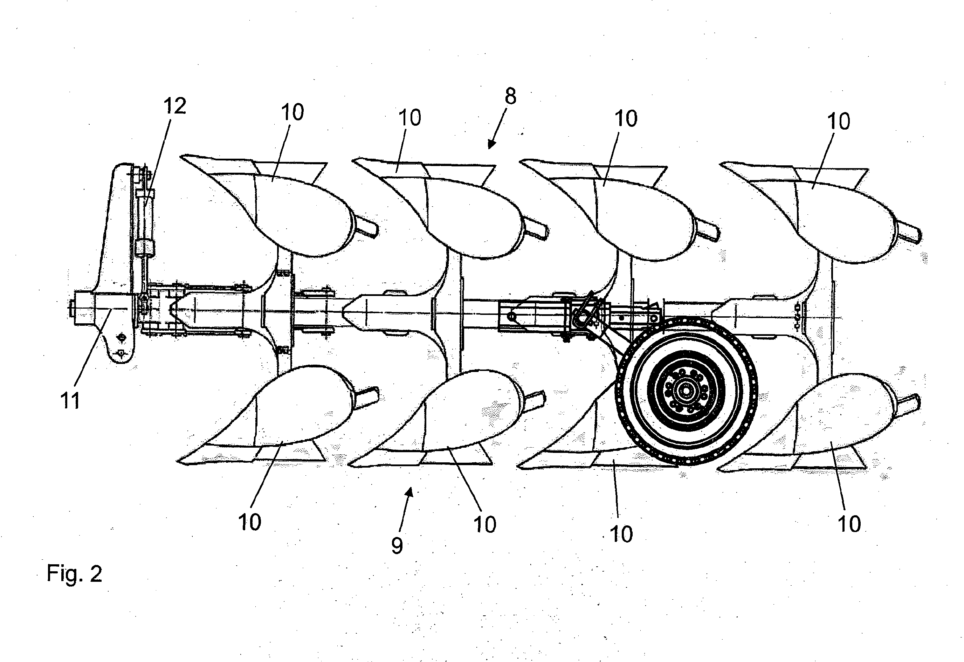

Die Seitenansicht nach Fig. 2 verdeutlicht, dass diese in 180°-Positionierung gegen-überliegend angeordnet sind, wobei in der Darstellung nach Fig. 2 die Pflugkörper 10 der Pflugscharreihe 9 sich in der Arbeits- und Betriebsstellung befinden.

Der Pflugrahmen 3 ist um eine liegende Schwenkachse 11 von einem Drehzylinder 12 um 180° zu verschwenken.

Des Weiteren ist aus Fig. 1 noch ein Rahmeneinschwenkzylinder 13 ersichtlich, der zur Breitenverstellung des Drehpfluges 1 vorgesehen ist, um den Pflugrahmen 3 einwärts oder auswärts zu verschwenken. Für eine Wende- bzw. Drehbewegung wird der Pflugrahmen 3 zumindest annähernd mittig hinter dem Schlepper eingeschwenkt. Ist eine Wende- bzw. Drehbewegung des Pflugrahmens 3 um 180° durchgeführt, wird der Pflugrahmen 3 über den Rahmeneinschwenkzylinder 13 wieder in Arbeits- und Betriebsstellung ausgeschwenkt.

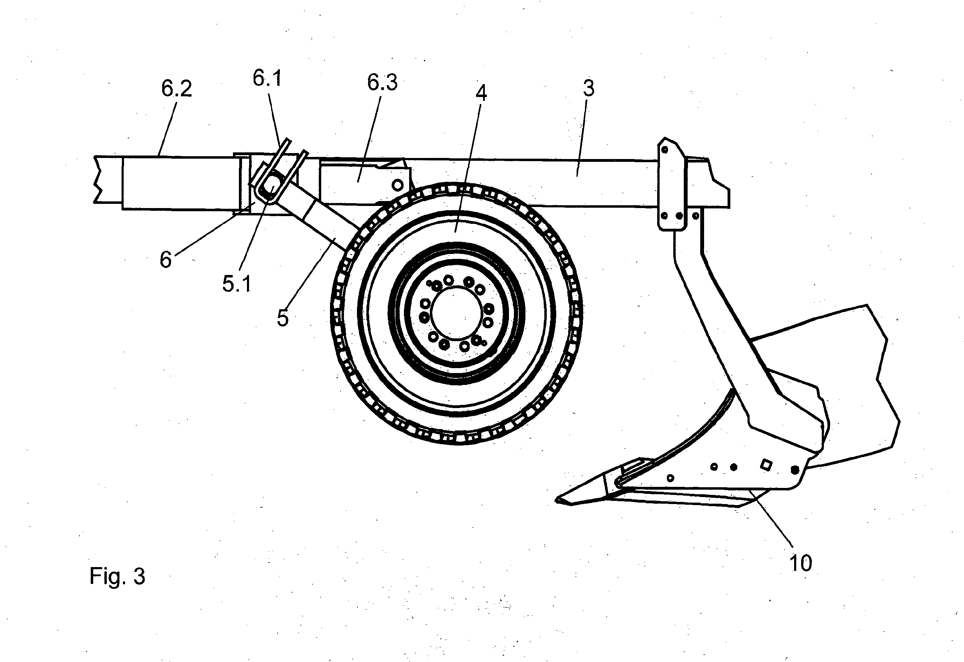

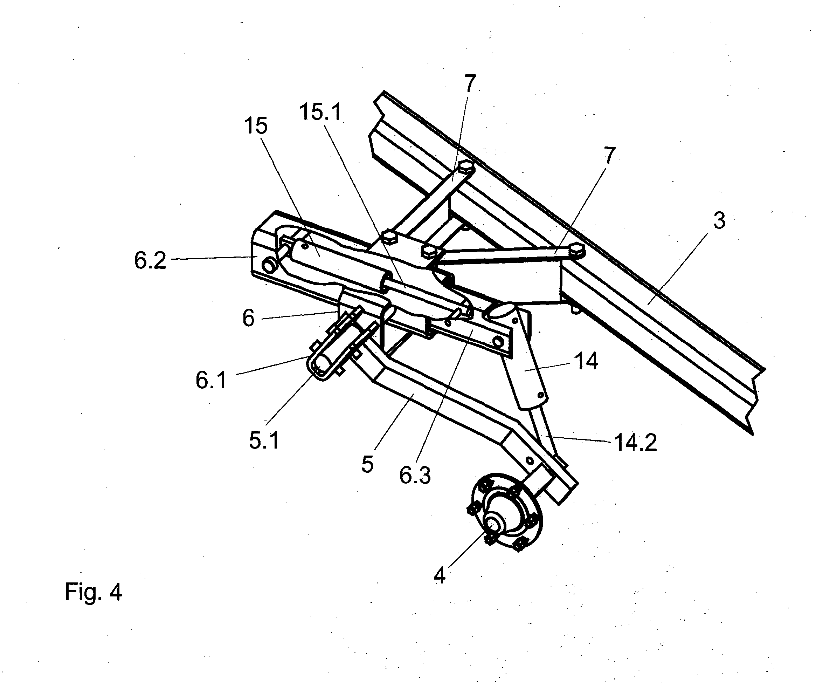

In Fig. 3 ist in Seitendarstellung noch einmal die Aufhängung des Stützrades 4 am Pflugrahmenteil 6 bzw. am Pflugrahmen 3 vergrößert dargestellt. Es ist das Radpendel 5 ersichtlich, das in der Führung 6.1 des Pflugrahmenteils 6 schwenkbeweglich geführt ist. In dem Rahmenteil 6 ist eine Gehäuseführung 6.2 eingebracht, in der ein Teleskopteil 6.3 translatorisch geführt ist. Über einen Achsstummel 5.1 ist das Radpendel 5 schwenkbeweglich in der Führung 6.1 angeordnet und kann um die liegende Achse des Achskörpers 5.1 verschwenkt werden. Die nähere Gestaltung des Pflugrahmenteils 6 der Gehäuseführung 6.2 im Teleskop 6.3 geht auch näher aus Fig. 4 hervor. Es ist ersichtlich, dass an dem Radpendel 5 ein Radzylinder 14 angreift, über den die Tiefeneinstellung des Stützrades 4 vorzunehmen ist. Bei einer entsprechenden Verstellung verschwenkt das Radpendel 5 um die liegende Achse des Achskörpers 5.1 und kann über den Radzylinder 14 in der eingestellten Tiefeneinstellung gehalten werden.

Der Radzylinder 14 ist an seinem oberen Ende an dem Teleskopteil 6.3 abgestützt, das in der Gehäuseführung 6.2 des Pfluganbauteils 6 angeordnet ist. Dieses Teleskopteil 6.3 wird von einem Stellzylinder 15 beaufschlagt, der somit für den Radzylinder 14 ein Widerlager in der in Fig. 4 gezeigten ausgefahrenen Betriebsstellung darbietet. Der Stellzylinder 15 mit seiner Stellstange 15.1 ist in der Fig. 4 in seiner ausgefahrenen Stellung gezeigt. Dabei ist das Ende des Kolbens 15.1 des Stellzylinders 15 am Teleskopteil 6.3 mittels eines Bolzens befestigt. An seinem rückwärtigen Ende ist der Stellzylinder 15 ebenfalls in der Gehäuseführung 6.2 ortsfest abgestützt, so dass in der Fig. 4 gezeigten Stellung sich der Radzylinder 14 aber auch damit das Stützradpendel 5 und das Stützrad 4 nicht verschwenken lassen. An Stelle des Stellzylinders 15 können auch andere Stellorgane, mit denen ein Hubweg durchlaufen werden kann, vorgesehen werden. Es können aber auch sonstige Stellorgane Verwendung finden, die eine Betriebsstellung in der Lage sind einzunehmen, in der das Stützrad 4 und der Radzylinder 14 in der Arbeitstiefeneinstellung an der Schwenkbewegung gehindert sind, die jedoch in eine solche zweite Betriebsstellung überführt werden können, in der für einen 180°-Drehvorgang des Pflugrahmens 3 das Stützrad 4 mitsamt dem Radzylinder 14 eine eigenständige Schwenkbewegung infolge von Schwerkraft in die gegenüberliegende Stützbetriebstellung durchmachen können.

Soll ein solcher Drehvorgang des Pflugrahmens 3 vorgenommen werden, in der die aus Fig. 2 ersichtliche obere Pflugscharreihe 8 mit ihren Pflugscharkörpern 10 in die untere Arbeits- und Betriebsstellung überführt wird und die aus Fig. 2 ersichtliche untere Pflugscharreihe 9 mit ihren Pflugkörpern 10 in die obere 180° gegenüberliegende Außerbetriebsstellung überführt wird, wird über den Drehzylinder 12 und den Rahmeneinschwenkzylinder 13 dieser Vorgang eingeleitet, indem der Pflugrahmen 3 zunächst aus der eingestellten Pflugscharbreite einwärts verschwenkt wird, nachdem die Pflugkörper 10 ausgehoben wurden. Das Stellorgan 15, also der Stellzylinder 15 nach Fig. 4 werden betätigt, und die Stellstange 15.1 wird aus der das Widerlager für den Radzylinder 14 darbietenden ausgefahrenen Betriebsstellung so gesteuert, dass die am Stellzylinder 15 angeschlossene Hydraulikleitung freigegeben wird, so dass es dem Stellzylinder 15 ermöglicht ist, bei einer Drehbewegung des Pflugrahmens um die Schwenkachse 11 mitsamt dem Pflugrahmenteil 6, dem Rad 4, dem Radpendel 5 und dem Radzylinder 14 dieser Drehbewegung zu folgen. Haben diese Teile eine Drehposition von mehr als 90° erreicht, können die Schwenkpendel 5 und Radzylinder 14 mitsamt dem Stützrad 4 verschwenken, wobei während der Schwenkbewegung des Stützrades 4 entsprechend dem Schwenkradius des Stützrades 4 die Stellstange 15.1 und die mit dieser verbundenen Teile wie das Teleskopteil 6.3 verfahren werden können und das Hydraulikmedium aus dem Druckraum des Stellzylinders 15 herausdrängen. Sobald der Pflugrahmen seine 180°-Drehbewegung um die Schwenkachse 11 vollendet hat und sich das Stützrad 4 mitsamt dem Radpendel 5 und dem Radzylinder 14 in der gegenüberliegenden Position befinden, kann der Stellzylinder 15 wieder mit dem Druckmedium beaufschlagt werden, so dass er in seine ausgefahrene, aus Fig. 4 ersichtliche Endlage fährt und den Radzylinder 14 wiederum in die Position bringt, in die er zuvor eingestellt war, womit ohne eine irgendwie geartete Betätigung des Radzylinders 14 die Arbeitstiefenstellung automatisch eingenommen werden kann, die zuvor eingestellt war. Über den Radzylinder 14 ist die entsprechende Bewegung des Radpendels 5 des Stützrades 4 ebenfalls blockiert, so dass sich das Stützrad 4 an der Stelle befindet, in der es zuvor gewesen ist.

Die gegenüberliegenden Arbeitstiefenführungen können auch so eingestellt werden, dass für die Arbeits- und Betriebsstellung der Pflugscharreihen 8 eine andere maximal ausgefahrene das Widerlager darbietende Stellung der Stellstange 15.1 angefahren wird als für die Pflugscharreihe 9, um für einen links wendenden Pflugkörper eine andere Arbeitstiefenstellung realisiert zu haben als für einen links wendenden Pflugkörper. Auch dies ist zu vollziehen, ohne den Radzylinder 14 gesteuert zu haben, der über eine autarke und separate Hydraulikmediumversorgung verfügen kann.

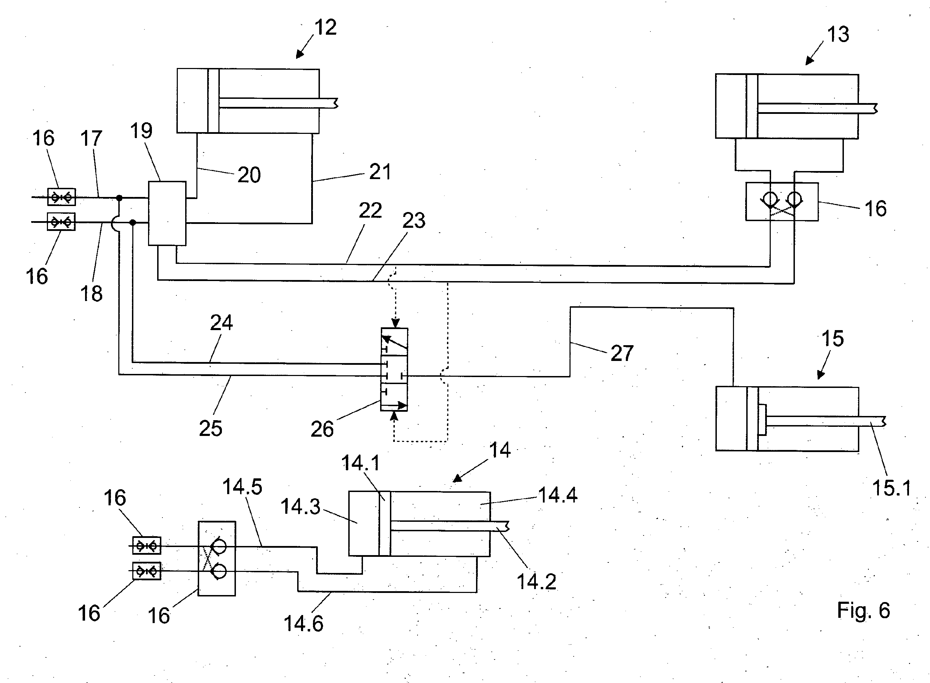

In den Fig. 6 bis 9 sind verschiedene Schaltpläne für die verschiedenen Zylinder veranschaulicht. In den Schaltplänen sind jeweils oben links der Drehzylinder 12, oben rechts der Rahmeneinschwenkzylinder 13 und unten links der Radzylinder 14 gezeigt, der einen doppelt wirkenden Kolben 14.1 mit einer Stellstange 14.2 hat und Druckräume 14.3 und 14.4. Dieser hat eine Steuerleitung 14.5 und eine Steuerleitung 14.6, über die den Druckräumen 14.3 und 14.4 ein Druckmedium zuführbar ist unter jeweiliger Entlastung des anderen Druckraumes 14.3 bzw. 14.4, wobei die Leitung 14.5 und 14.6 über gesteuerte Rückschlagventile 15 gesteuert werden. Über die Stellstange 14.2 des Radzylinders 14 kann die Arbeitstiefenführung des Stützrades 4 verändert werden.

Der obere Teil des Schaltplanes nach Fig. 6 zeigt wiederum Druckmediumleitungen 17 und 18, denen zunächst auch wiederum Rückschlagventile 16 zugeordnet sind. Diesen Druckmediumleitungen 17 und 18 ist ein Folgesteuerventil 19 zugeordnet, von dem Leitungen 20 und 21 zu dem Schwenkzylinder 12 führen sowie Leitungen 22 und 23 zu dem Rahmeneinschwenkeinzylinder 13.

Ausgehend von den Druckmediumleitungen 17 und 18 führen noch Leitungen 24 und 25 zu dem Stellzylinder 15 für die Darbietung des Widerlagers für den Radzylinder 14. Die Zylinder 12, 13 und 15 haben auch jeweils wiederum doppelt wirkende Kolbenstange 15.1. Den Leitungen 24 und 25 des Stellzylinders 15 ist ein gesteuertes 3/3-Wegeventil 26 zugeordnet. Von dem Wegeventil 26 führt eine Leitung 27 zu dem Stellzylinder 15. Dem Rahmeneinschwenkzylinder 13 in den Leitungen 22/23 ist ein Doppelrückschlagventil 16 zugeordnet. Soll ein Drehpflug ausgehoben werden, bleibt das Stützrad 4 in seiner Arbeitsposition und auf seiner durch den Radzylinder 14 eingestellten Arbeitstiefe. Die Drehung bzw. die Verschwenkung des Pflugrahmens 3 wird vom Schlepper eingeleitet. Das Folgesteuerventil 19 betätigt das Rahmeneinschwenkventil 13 und das 3/3-Wegeventil 26 dahingehend, das über die Leitung 25 die Kolbenbodenseite des Radzylinders 15 freigegeben wird. Ist der Pflugrahmen 3 eingeschwenkt, dreht der Pflugrahmen 3 über eine entsprechende Betätigung des Drehylinders 12, wobei nach 90°-Drehwinkel das Radpendel 5 mitsamt dem Stützrad 4 sich infolge Eigengewicht auf die gegenüberliegende Stellung zu bewegen, wobei der Kolben über die doppelt wirkende Kolbenstange 15.1 des Stellzylinders 15 so lange eingeschoben wird, bis das Stützrad 4 mitsamt dem Radpendel 5 und dem Radzylinder 14 auf die gegenüberliegende Seite und damit in die gegenüberliegende Arbeitsstellung gelangt sind. Danach betätigt das Folgesteuerventil 19 das Rahmeneinschwenkventil 13 und der Pflugrahmen 3 kann wieder ausgeschwenkt werden. Des Weiteren wird über das 3/3-Wegeventil 26 und die Leitung 25 das Stellventil 15 mit dem Druckmedium beaufschlagt, so dass die Stellstange 15.1 des Stellzylinders 14 in ihre ausgefahrene Position gelangen kann, in der sie den Radzylinder 14 blockiert und ein Widerlager darbietet und somit an einer Schwenkbewegung hindert.

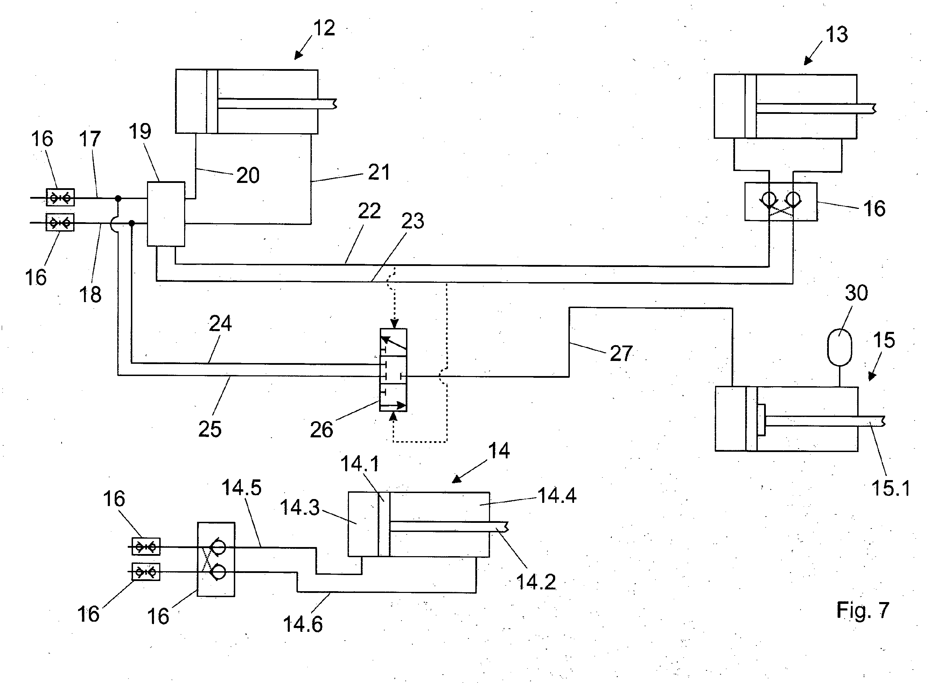

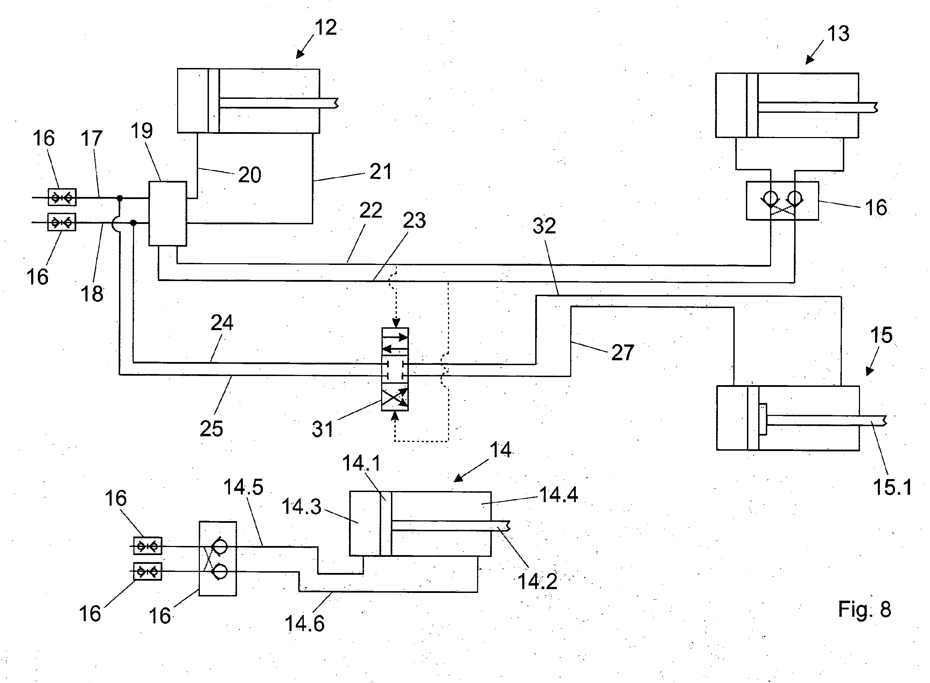

Bei ansonsten anlogen Aufbau sind in den Fig. 7 und 8 alternative Ausführungsvarianten des Schaltplanes nach Fig. 6 dargestellt. In dem Ausführungsbeispiel nach Fig. 7 ist an dem Stellzylinder 15 noch zusätzlich ein Druckspeicher 30 vorgesehen, um den Druckraum, der dem mit der Steuerleitung 25 verbundenen Druckraum gegenüberliegend angeordnet ist, mit einem Druckmedium zu versehen, um nach Freigabe der Druckleitung 25 die Einschubbewegung der Stellstange 15.1 zu unterstützen. In dem Ausführungsbeispiel nach Fig. 8 ist anstelle des Ventils 26 der Ausführungsbeispiele nach den Fig. 6 und 7 ein 4/3-Wegeventil 31 mit Sperrmittelstellung vorgesehen, das gesteuert ausgebildet ist. An diesem 4/3-Wegeventil ist noch die zusätzliche Leitung 32 angeschlossen, die ebenfalls an den Stellzylinder 15 angeschlossen ist, um den Einfahrvorgang der Stellstange 15.1 zu unterstützen.

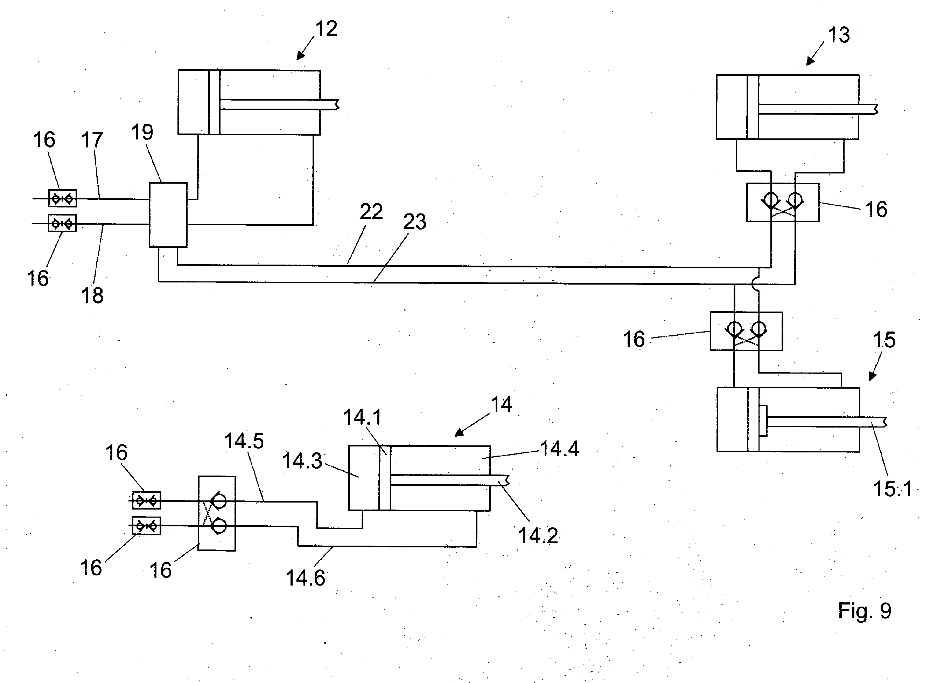

In dem Ausführungsbeispiel nach Fig. 9 sind die Leitungen 22 und 23 mit dem Stellzylinder 15 über ein doppeltes Rückschlagventil 16 verbunden und wiederum mit dem Rahmeneinschwenkzylinder 13, um auch den Stellzylinder 15 freizugeben und seine Einfahrbewegung zu unterstützen.

## Patentansprüche

1. Drehpflug (1) mit einem an einem Anbaubock (2) zur Verbindung des Drehpfluges (1) mit einem landwirtschaftlichen Schlepper dreh- und/oder verschwenkbar befestigbaren, über ein Stützrad (4) auf dem Erdboden abstützbaren Pflugrahmen (3) und mit auf gegenüberliegenden Seiten des Pflugrahmens (3) angeordneten Pflugscharreihen (8,9), so dass durch eine über einen Drehzylinder (12) eingeleitete Drehbewegung des Pflugrahmens (3) wahlweise die eine (8) oder die andere Pflugscharreihe (9) in ihre Betriebsstellung oder ihre Außerbetriebsstellung überführbar ist, wobei das Stützrad (4) zur Arbeitstiefenführung des Drehpfluges (1) über ein Verstellelement (14) in seiner Arbeitstiefenführung einstellbar ist und bei einer Drehung des Pflugrahmens (3) das Stützrad (4) mitsamt dem Verstellelement (14) in seine gegenüberliegend ausgerichtete Stützbetriebsstellung schwenkt, wobei das Verstellelement (14) des Stützrades (4) in seiner eingestellten Arbeitstiefenführung an einem ein Widerlager darbietenden Stellorgan (15) abgestützt ist, dass das Stützrad (4) durch dieses Stellorgan (15) und das Verstellelement (14) an einer Stellbewegung in der eingestellten Arbeitstiefenführung gehindert ist, und dass nach Freigabe des Stellorgans (15) bei Drehung des Pflugrahmens (3) das Stützrad (4) mitsamt dem Verstellelement (14) vorzugsweise selbsttätig in die gegenüberliegend ausgerichtete Stützbetriebsstellung verschwenkbar ist, **dadurch gekennzeichnet, dass** das Stellorgan (15) als Stellzylinder ausgebildet ist.

2. Drehpflug nach Anspruch 1, **dadurch gekennzeichnet, dass** das Stellorgan (15) als hydraulisch wirkender Stellzylinder ausgebildet ist.

3. Drehpflug nach einem der Ansprüche 1 bis 2, **dadurch gekennzeichnet, dass** das Stellorgan (15) nach seiner Freigabe eine durch eine Schwenkbewegung des Stützrades (4) und des Verstellelementes (14) ausgelöste, die Schwenkbewegung des Stützrades (4) und des Verstellelementes (14) in die gegenüberliegende zulassende freie Bewegung durchführt und nach Erreichen des Stützrades (4) in die gegenüberliegende Stützbetriebsstellung in die vor der Drehbewegung des Pflugrahmens (3) eingestellte, das Widerlager darbietende Stellbetriebstellung zurücküberführbar ist.

4. Drehpflug nach einem der Ansprüche 1 bis 3, **dadurch gekennzeichnet, dass** die das Widerlager darbietende Stellbetriebsstellung des Stellorgans (15) für die eine Pflugscharreihe (8) und für die andere Pflugscharreihe (9) wählbar ist.

5. Drehpflug nach einem der Ansprüche 1 bis 5, **dadurch gekennzeichnet, dass** das Verstellelement (14) an seiner dem Stützrad (4) abgewandten Endbereich an einem innerhalb eines Pflugrahmenteils (6) verschieblich geführten Teleskopteil (6.3) abgestützt ist, an dem das Stellorgan (15) angreift.

6. Drehpflug nach Anspruch 5, **dadurch gekennzeichnet, dass** das Pflugrahmenteil (6) am verschwenkbaren Pflugrahmen (3) befestigt ist.

7. Drehpflug nach einem der Ansprüche 1 bis 6, wobei das Verstellelement als hydraulischer Radzylinder ausgebildet ist, **dadurch gekennzeichnet, dass** der Radzylinder (14) bei Überführung des Pflugrahmens (3) aus der einen Betriebsstellung in die andere Betriebsstellung in der eingestellten Arbeitstiefeneinstellung verbleibt.

8. Drehpflug nach einem der Ansprüche 1 bis 7, **dadurch gekennzeichnet, dass** ein Folgesteuerventil (19) zwischen dem Stellzylinder (15) und dem Drehzylinder (12) vorgesehen ist, das zur Freigabe des Stellzylinders (15) eine Kolbenseite des Stellzylinders (15) freigibt, eine Kolbenseite des Drehzylinders (12) zum Verschwenken des Pflugrahmens (3) mit Druck beaufschlagt und eine andere Kolbenseite eines Kolbens des Stellzylinders (15) freigibt.

9. Drehpflug nach Anspruch 8, **dadurch gekennzeichnet, dass** an das Folgesteuerventil (19) ein Rahmeneinschwenkzylinder (13) zur Breitenverstellung angeschlossen ist, das nach Betätigen des Folgesteuerventils (19) eine Kolbenseite des Kolbens des Rahmeneinschwenkzylinders (13) im Sinne eines Einschwenkens des Pflugrahmens (3) betätigt.

10. Drehpflug nach Anspruch 7, **dadurch gekennzeichnet, dass** nach Drehung des Pflugrahmens (3) um 90° das Stützrad (4) über den Radzylinder (14) auf einen Kolben des Stellzylinders (15) einwirkt und diesen translatorisch bewegt, bis das Stützrad (4) seine gegenüberliegende Stützbetriebsstellung erreicht, wonach über ein Stützradschaltventil (26, 31) der Kolben des Stellzylinders (15) in dem Sinne mit Druck beaufschlagt wird, dass der Stellzylinder (15) seine das Widerlager darbietende Stellbetriebsstellung einnimmt.

11. Drehpflug nach der Ansprüche 7 und 8, **dadurch gekennzeichnet, dass** der Radzylinder (14) unabhängig von dem Folgesteuerventil (19) hydraulisch einstellbar ist.

12. Drehpflug nach Anspruch 9, **dadurch gekennzeichnet, dass** über das Folgesteuerventil (19) nach Erreichen der gegenüberliegenden Betriebsstellung des Pflugrahmens (3) der Rahmenschwenkzylinder (13) betätigt wird im Sinne einer Rahmenausschwenkung.

13. Drehpflug nach der Ansprüche 7 und 8, **dadurch gekennzeichnet, dass** nach Freigabe des Stellzylinders (15) das Folgesteuerventil (19) eine weitere Steuerleitung (23) freigibt, um den Stellzylinder (15) bei der Überführung in seine den Radzylinder (14) freigebenden Freigabebetriebsstellung zu unterstützen.

14. Drehpflug nach einem der Ansprüche 9 bis 13, **dadurch gekennzeichnet, dass** an den Stellzylinder (15) ein Druckspeicher (30) anschließbar ist, über den nach Freigabe des Stellzylinders (15) ein Druckmedium zur Unterstützung der Überführung des Kolbens des Stellzylinders in seine den Radzylinder freigebende Stellbetriebsstellung freigebbar ist.

15. Drehpflug nach Anspruch 9, **dadurch gekennzeichnet, dass** die Leitungen (14,25) des als Drehzylinder ausgebildeten Stellzylinders (15) an die Leitungen des Schwenkzylinders (12) oder (22, 23) des Rahmeneinschwenkzylinders (13) anschließbar sind.

## Claims

1. Alternating plough (1) with a plough frame (3) which is fastenable rotatably and/or pivotably to a headstock (2) for connecting the alternating plough (1) to an agricultural tractor, is supportable on the ground via a support wheel (4) and has rows of ploughshares (8, 9) arranged on opposite sides of the plough frame (3) such that, by means of a rotational movement of the plough frame (3) initiated via a rotary cylinder (12), either the one row of ploughshares (8) or the other row of ploughshares (9) is transferable into the operating position thereof or into the non-operating position thereof, wherein, for the working depth guide of the rotary plough (1), the support wheel (4) can be set in the working depth guide thereof via an adjustment element (14) and, when the plough frame (3) rotates, the support wheel (4) together with the adjustment element (14) pivots into the oppositely oriented support operating position thereof, wherein the adjustment element (14) of the support wheel (4) in the set working depth guide thereof is supported on an actuating member (15) providing an abutment, wherein the support wheel (4) is prevented by said actuating member (15) and the adjustment element (14) from an actuating movement in the set working depth guide, and wherein, after release of the actuating member (15), the support wheel (4) together with the adjustment element (14) is pivotable, preferably automatically, into the oppositely oriented support operating position when the plough frame (3) rotates, **characterized in that** the actuating member (15) is designed as an actuating cylinder.

2. Alternating plough according to Claim 1, **characterized in that** the actuating member (15) is designed as a hydraulically acting actuating cylinder.

3. Alternating plough according to either of Claims 1 and 2, **characterized in that** the actuating member (15), after the release thereof, carries out a free movement, which is triggered by a pivoting movement of the support wheel (4) and of the adjustment element (14) and permits the pivoting movement of the support wheel (4) and of the adjustment element (14) into the opposite support operating position and, after the support wheel (4) has reached the opposite support operating position, the actuating member can be transferred back into the actuating operating position set prior to the rotational movement of the plough frame (3) and providing the abutment.

4. Alternating plough according to one of Claims 1 to 3, **characterized in that** the actuating operating position of the actuating member (15) providing the abutment is selectable for the one row of ploughshares (8) and for the other row of ploughshares (9).

5. Alternating plough according to one of Claims 1 to 4, **characterized in that** the adjustment element (14) is supported at the end region thereof facing away from the support wheel (4) on a telescopic part (6.3) which is guided displaceably within a plough frame part (6) and on which the actuating member (15) acts.

6. Alternating plough according to Claim 5, **characterized in that** the plough frame part (6) is fastened to the pivotable plough frame (3).

7. Alternating plough according to one of Claims 1 to 6, wherein the adjustment element is designed as a hydraulic wheel cylinder, **characterized in that**, when the plough frame (3) is transferred from the one operating position into the other operating position, the wheel cylinder (14) remains in the set working depth setting.

8. Alternating plough according to one of Claims 1 to 7, **characterized in that** a sequence control valve (19) is provided between the actuating cylinder (15) and the rotary cylinder (12), which sequence control valve, for the release of the actuating cylinder (15), releases one piston side of the actuating cylinder (15), subjects one piston side of the rotary cylinder (12) to pressure in order to pivot the plough frame (3) and releases another piston side of a piston of the actuating cylinder (15).

9. Alternating plough according to Claim 8, **characterized in that** a frame pivoting-in cylinder (13) for adjusting the width is connected to the sequence control valve (19), which frame pivoting-in cylinder, after actuation of the sequence control valve (19), actuates one piston side of the piston of the frame pivoting-in cylinder (13), with the effect of pivoting in the plough frame (3).

10. Alternating plough according to Claim 7, **characterized in that**, after the plough frame (3) is rotated through 90°, the support wheel (4) acts via the wheel cylinder (14) on a piston of the actuating cylinder (15) and moves said piston in a translatory manner until the support wheel (4) reaches the opposite support operating position thereof, after which the piston of the actuating cylinder (15) is subjected to pressure via a support wheel switching valve (26, 31), with the effect that the actuating cylinder (15) takes up the actuating operating position thereof providing the abutment.

11. Alternating plough according to Claims 7 and 8, **characterized in that** the wheel cylinder (14) is hydraulically adjustable independently of the sequence control valve (19).

12. Alternating plough according to Claim 9, **characterized in that**, after the opposite operating position of the plough frame (3) is reached, the frame pivoting-in cylinder (13) is actuated via the sequence control valve (19), with the effect of pivoting out the frame.

13. Alternating plough according to Claims 7 and 8, **characterized in that**, after the actuating cylinder (15) is released, the sequence control valve (19) releases a further control line (23) in order to support the actuating cylinder (15) during the transfer into the release operating position thereof releasing the wheel cylinder (14).

14. Alternating plough according to one of Claims 9 to 13, **characterized in that** a pressure accumulator (30) is connectable to the actuating cylinder (15), via which pressure accumulator, after the actuating cylinder (15) is released, a pressure medium can be released in order to support the transfer of the piston of the actuating cylinder into the actuating operating position thereof releasing the wheel cylinder.

15. Alternating plough according to Claim 9, **characterized in that** the lines (14, 25) of the actuating cylinder (15), which is designed as a rotary cylinder, are connectable to the lines of the pivoting cylinder (12) or (22, 23) of the frame pivoting-in cylinder (13).

## Revendications

1. Charrue rotative (1) comportant un châssis de charrue (3) pouvant être appuyé sur le sol par l'intermédiaire d'une roue d'appui (4), fixable de manière rotative et/ou basculante sur un attelage (2) pour relier la charrue rotative (1) avec un tracteur agricole et comportant des rangées de socs de charrue (8, 9) disposées sur des côtés opposés du châssis de charrue (3), de sorte que par un mouvement de rotation du châssis de charrue (3) induit par un cylindre rotatif (12) au choix l'une (8) ou l'autre (9) des rangées de socs de charrue peut être passée dans sa position de fonctionnement ou dans sa position hors service, dans laquelle la roue d'appui (4) peut être réglée en vue d'un guidage en profondeur de travail de la charrue rotative (1) par l'intermédiaire d'un élément de réglage (14) dans son guidage en profondeur de travail et lors d'une rotation du châssis de charrue (3) la roue d'appui (4) ainsi que l'élément de réglage (14) basculent dans sa position de fonctionnement auxiliaire orientée en vis-à-vis, dans laquelle l'élément de réglage (14) de la roue d'appui (4) est appuyé dans son guidage en profondeur de travail réglé sur un organe de réglage (15) présentant une butée, dans laquelle cet organe de réglage (15) et l'élément de réglage (14) empêchent la roue d'appui (4) d'effectuer un mouvement de réglage dans le guidage en profondeur de travail réglé, et dans laquelle après le déblocage de l'organe de réglage (15) lors de la rotation du châssis de charrue (3) la roue d'appui (4) ainsi que l'élément de réglage (14) peuvent être de préférence basculés automatiquement dans la position de fonctionnement auxiliaire orientée en vis-à-vis, **caractérisée en ce que** l'organe de réglage (15) est conçu comme un cylindre de réglage.

2. Charrue rotative selon la revendication 1, **caractérisée en ce que** l'organe de réglage (15) est conçu comme un cylindre de réglage à action hydraulique.

3. Charrue rotative selon une des revendications 1 à 2, **caractérisée en ce que** l'organe de réglage (15) après son déblocage effectue un mouvement libre déclenché par un mouvement pivotant de la roue d'appui (4) et de l'élément de réglage (14), autorisant le mouvement pivotant de la roue d'appui (4) et de l'élément de réglage (14) dans la position de fonctionnement auxiliaire opposée et après que la roue d'appui (4) a atteint la position de fonctionnement auxiliaire opposée, il peut être ramené dans la position de fonctionnement de réglage présentant la butée, réglée avant le mouvement de rotation du châssis de charrue (3).

4. Charrue rotative selon une des revendications 1 à 3, **caractérisée en ce que** la position de fonctionnement de réglage de l'organe de réglage (15) présentant la butée peut être sélectionnée pour une rangée de socs de charrue (8) et pour l'autre rangée de socs de charrue (9).

5. Charrue rotative selon une des revendications 1 à 4, **caractérisée en ce que** l'élément de réglage (14) est appuyé sur sa zone d'extrémité qui se détourne de la roue d'appui (4) sur une partie télescopique (6.3) guidée de manière coulissante à l'intérieur d'une partie de châssis de charrue (6), sur laquelle s'engage l'organe de réglage (15).

6. Charrue rotative selon la revendication 5, **caractérisée en ce que** la partie de châssis de charrue (6) est fixée sur le châssis de charrue basculant (3).

7. Charrue rotative selon une des revendications 1 à 6, dans laquelle l'élément de réglage est réalisé comme un cylindre de roue hydraulique, **caractérisée en ce que** le cylindre de roue (14) lorsque le châssis de charrue (3) passe d'une position de fonctionnement à l'autre position de fonctionnement reste dans le réglage en profondeur de travail réglé.

8. Charrue rotative selon une des revendications 1 à 7, **caractérisée en ce qu'**une soupape de commande séquentielle (19) est prévue entre le cylindre de réglage (15) et le cylindre rotatif (12), qui débloque un côté de piston du cylindre de réglage (15) afin de débloquer le cylindre de réglage (15), sollicite avec une pression un côté de piston du cylindre rotatif (12) pour faire basculer le châssis de charrue (3) et débloque un autre côté de piston d'un piston du cylindre de réglage (15).

9. Charrue rotative selon la revendication 8, **caractérisée en ce qu'**à la soupape de commande séquentielle (19) est raccordé un cylindre basculant vers l'intérieur de châssis (13) pour le réglage en largeur, qui après l'actionnement de la soupape de commande séquentielle (19) actionne un côté de piston du piston du cylindre basculant vers l'intérieur de châssis (13) afin d'effectuer un basculement vers l'intérieur du châssis de charrue (3).

10. Charrue rotative selon la revendication 7, **caractérisée en ce qu'**après la rotation du châssis de charrue (3) de 90° la roue d'appui (4) influe par l'intermédiaire du cylindre de roue (14) sur un piston du cylindre de réglage (15) et déplace celui-ci en translation, jusqu'à ce que la roue d'appui (4) atteigne sa position de fonctionnement auxiliaire opposée, après quoi par l'intermédiaire d'une soupape de commutation de roue d'appui (26, 31) le piston du cylindre de réglage (15) est sollicité avec une pression de sorte que le cylindre de réglage (15) adopte sa position de fonctionnement de réglage présentant la butée.

11. Charrue rotative selon les revendications 7 et 8, **caractérisée en ce que** le cylindre de roue (14) est réglable hydrauliquement indépendamment de la soupape de commande séquentielle (19).

12. Charrue rotative selon la revendication 9, **caractérisée en ce que** par l'intermédiaire de la soupape de commande séquentielle (19) après que la position de fonctionnement opposée du châssis de charrue (3) a été atteinte, le cylindre basculant vers l'intérieur de châssis (13) est actionné afin de réaliser un pivotement vers l'extérieur du châssis.

13. Charrue rotative selon les revendications 7 et 8, **caractérisée en ce qu'**après le déblocage du cylindre de réglage (15) la soupape de commande séquentielle (19) débloque une autre ligne de commande (23), afin d'assister le cylindre de réglage (15) lors de son passage dans sa position de fonctionnement de déblocage débloquant le cylindre de roue (14).

14. Charrue rotative selon une des revendications 9 à 13, **caractérisée en ce qu'**un accumulateur de pression (30) peut être raccordé au cylindre de réglage (15), par l'intermédiaire duquel après le déblocage du cylindre de réglage (15) un fluide pressurisé pour assister le passage du piston du cylindre de réglage dans sa position de fonctionnement de réglage débloquant le cylindre de roue peut être débloqué.

15. Charrue rotative selon la revendication 9, **caractérisée en ce que** les lignes (14, 25) du cylindre de réglage (15) réalisé comme un cylindre rotatif peuvent être raccordées aux lignes du cylindre pivotant (12) ou (22, 23) du cylindre basculant vers l'intérieur de châssis (13).
